# EUROPÄISCHE PATENTSCHRIFT

(11) **EP 1 198 599 B1**
(45) Veröffentlichungstag und Bekanntmachung des Hinweises auf die Patenterteilung: **11.02.2004**
(21) Anmeldenummer: 00940239.7
(22) Anmeldetag: 12.05.2000
(51) Int. Cl.: C22B 7/04, C22B 7/02, C21B 3/06, C21B 3/04

(54) **VERFAHREN ZUR SCHLACKENKONDITIONIERUNG MIT EINBRINGEN VON HÜTTENRESTSTOFFEN SOWIE ANLAGE HIERZU**
METHOD FOR CONDITIONING SLAG WITH THE ADDITION OF METALLURGICAL RESIDUAL MATERIALS AND AN INSTALLATION FOR THE SAME
PROCEDE DE CONDITIONNEMENT DE SCORIES AVEC INCORPORATION DE RESIDUS SIDERURGIQUES, ET INSTALLATION CORRESPONDANTE

(30) Priorität: 08.06.1999 AT 101199
(43) Veröffentlichungstag der Anmeldung: 24.04.2002
(73) Patentinhaber: VOEST-ALPINE INDUSTRIEANLAGENBAU GMBH, 4020 Linz (AT)
(72) Erfinder: PIRKER, Hermann, A-4221 Steyregg (AT)
(74) Vertreter: VA TECH Patente GmbH & Co
(86) Internationale Anmeldenummer: PCT/EP2000/004304
(87) Internationale Veröffentlichungsnummer: WO 2000/075385

(56) Entgegenhaltungen:
- EP-A- 0 024 065
- EP-A- 0 605 378
- EP-A- 0 670 188
- EP-A- 0 716 153
- WO-A-96/24696
- DE-A- 2 648 220
- DE-A- 2 829 370
- GB-A- 1 412 486
- US-A- 4 725 307
- US-A- 5 516 357
- US-A- 5 882 375
- PATENT ABSTRACTS OF JAPAN vol. 004, no. 151 (C-028), 23. Oktober 1980 (1980-10-23) & JP 55 097408 A (KAWASAKI STEEL CORP), 24. Juli 1980 (1980-07-24)
- PATENT ABSTRACTS OF JAPAN vol. 010, no. 085 (C-336), 4. April 1986 (1986-04-04) & JP 60 218415 A (NIHON JIRIYOKU SENKOU KK), 1. November 1985 (1985-11-01)

## Beschreibung

Die Erfindung betrifft ein Verfahren zur Schlackenkonditionierung und zum Hüttenreststoffrecycling in der Eisenhüttenindustrie sowie eine Anlage zur Durchführung des Verfahrens.

Es ist bekannt, Hochofenschlacken zu marktfähigen Erzeugnissen weiterzuverarbeiten, wie zum Beispiel zu Hochofenstückschlacke für den Straßenbau, Hüttensand, Hüttenbims, Hüttenwolle etc. Durch Umwandlung der Schlacke in ein höherwertiges Erzeugnis ist es möglich, die Rentabilität einer Schlackenverwertung weiter zu verbessern.

Zu diesem Zweck ist es bekannt, die Eigenschaften der Hochofenschlacken den Güteanforderungen der Schlackenverwertung anzupassen, wobei jedoch sämtliche Maßnahmen zur Verbesserung der Schlackenerzeugnisse Nachrang haben gegenüber den Anforderungen, die von metallurgischer und betriebstechnischer Seite an einen Hochofenbetrieb sowie an den Stahlwerksbetrieb gestellt werden.

Es ist kaum möglich, die Schlackenbeschaffenheit den Erfordernissen der nachfolgenden Schlackenverwertung in solchem Maß anzupassen, daß die Hochofenschlacke gänzlich und ohne Qualitätseinbußen für das Erzeugnis verwertet werden kann, da das Hauptaugenmerk stets auf die Qualität des Roheisens oder des Stahls gerichtet sein muß.

Eine besondere Problematik ergibt sich durch die weiters im Hüttenbetrieb anfallenden Schlacken, wie zum Beispiel durch die Elektroofenschlacke, Konverterschlacke, Pfannenschlacke, da diese Schlacken isoliert gesehen nur schwierig für ein Erzeugnis zu konditionieren sind und außerdem oftmals wegen ihrer relativ geringen Mengen, in denen sie anfallen, nur im erstarrten Zustand vorliegen.

Weiters stellen Hüttenreststoffe, wie Hüttenstäube, Zunder, Hüttenschlämme, Filterstäube etc. den Hüttenfachmann vor das Problem einer sinnvollen Verwertung. Oftmals werden Hüttenreststoffe auf Halde gelegt, ohne daß die in ihnen enthaltenen Wertstoffe - in der Hauptsache Eisen - sinnvoll verwertet werden. Wird eine Rückgewinnung der in den Reststoffen enthaltenen Wertstoffe durchgeführt, findet diese zumeist in den Primärschmelzaggregaten statt, die dadurch zusätzlich belastet werden. Zudem erfordert der Einsatz der Hüttenreststoffe bei diesen Schmelzprozessen eine aufwendige Aufbereitung an verschiedenen Orten des Hüttenwerks, so daß einer sinnvollen Verwertung der

Hüttenreststoffe ein enormer Kostenaufwand entgegensteht, wodurch von der Verwertung der Hüttenreststoffe zu einem höherwertigen Produkt oft abgesehen wird.

Aus der WO 96/24696 ist bereits ein Verfahren zur Herstellung von Roheisen oder Stahl und Zementklinker bekannt, bei dem vorzugsweise Stahlwerksschlacken mit Eisenoxidträgern, wie Eisenerzen, insbesondere Hämatit in Mengen von bis zu 30 Gew.-%, eingeschmolzen, reduziert und die Schlacken konditioniert werden. Derartige Hämatitzugaben erlauben die unmittelbare Ansteuerung der Reduktion auf geforderte Fe₂O₃-Gehalte und stellt gleichzeitig Sauerstoff für die direkte Reduktion des im Eisenbad gelösten Kohlenstoffs zur Verfügung. Bei diesem Verfahren wird nicht nur Stahlwerksschlacke konditioniert, sondern in nachteiliger Weise zusätzlich Schlacke aus eingesetztem Erz erzeugt.

Aus der WO 96/34989 (US-A 5,882,375) ist ein mehrstufiges Verfahren zur Herstellung hydraulischer Bindemittel und von Legierungen, wie Eisenchrom und Eisenvanadium, auf einem vorbereiteten Eisenbad bekannt. Dieses Verfahren setzt besondere chrom- und/oder vanadiumhaltige Schlacken aus der Stahlerzeugung voraus. Es erlaubt einen Zusatz von Hochofenschlacke in einer gegenüber der Stahlwerksschlacke geringeren Menge, erfordert allerdings zwei Eisenbadreaktoren oder einen Eisenbadreaktor mit zwei durch eine Überleiteinrichtung verbundene Behandlungsgefäße; insgesamt somit einen großen apparativen Aufwand zu seiner Umsetzung.

Aus der JP-A 60-218415 ist ein Verfahren zur Aufarbeitung von Stahlwerksschlacken und Hüttenstäuben unter Beimischung von Koks in einer nur geringe Mengen aufnehmenden Schlackenpfanne bekannt. Auch dieses Verfahren ist nicht geeignet alle Schlacken aus einem Hüttenwerk zu konditionieren, insbesondere wird die große Menge der überwiegend bei Reduktionsverfahren anfallenden Schlacken aus Reduktionsprozessen außer Betracht gelassen. Die gesamten anfallenden Schlackenmengen aus einem Hochofenprozess können in einem Behandlungsgefäß nach Art einer Schlackenpfanne mit einer in die Schlacke eintauchenden Blaslanze nicht erfolgversprechend konditioniert werden.

Der Erfindung liegt die Aufgabe zugrunde, sämtliche in einem Hüttenwerk anfallenden Schlacken unabhängig von Eisen- oder Stahlerzeugung für eine Weiterverarbeitung zu konditionieren, und zwar ohne Rücksicht auf Roheisen- und/oder Stahlqualität nehmen zu müssen. Gleichzeitig soll eine Rückgewinnung der Hüttenreststoffe, insbesondere des darin enthaltenen Eisens, ermöglicht sein, ohne die Prozesse zur Eisen- oder Stahlerzeugung zu belasten und ohne den betriebstechnischen und apparativen Aufwand, verursacht durch eine Aufbereitung der Hüttenreststoffe, in einem Hüttenwerk zu erhöhen. Insbesondere soll ein Brikettieren, Pelletieren oder Sintern der Reststoffe vermieden werden.

Die Lösung dieser Aufgabe ist erfindungsgemäß durch folgende Schritte gekennzeichnet:
- Zusammenführen und Behandeln von mindestens einer Schlacke aus der Gruppe von Schlacken mindestens eines Abstiches eines Hochofens oder eines Einschmelzvergasers eines Direktreduktionsverfahrens in flüssigem Zustand und von mindestens einer Schlacke aus der Gruppe von sonstigen Hüttenschlacken, wie Elektroofenschlacke, Konverterschlacke, Pfannenschlacke, aus einem Stahlwerk und Schlacken von einer Roheisenvorbehandlung in einem Schlackenkonditioniergefäß,
- Einbringen von Hüttenreststoffen, vorzugsweise aller Hüttenreststoffe, wie Hüttenstäuben, Zunder, Hüttenschlämmen, mit Ausnahme von Beizschlämmen, in das Schlackenkonditioniergefäß,
- Einblasen von Reduktionsmittel, vorzugsweise zusammen mit feinteiligen Hüttenreststoffen durch Koinjektion, in das Schlackenkonditioniergefäß zum Ausreagieren der eingebrachten Stoffe, insbesondere Reduzieren der eisenhaltigen Reststoffe,
- Einbringen von Kohlenstoff zum Auflegieren des reduzierten Eisens aus den eisenhaltigen Reststoffen,
- Rühren der im Schlackenkonditioniergefäß enthaltenen Schmelzen durch Einblasen von Spülgas über Bodenspülelemente des Schlackenkonditioniergefäßes,
- Aufheizen der im Schlackenkonditioniergefäß enthaltenen Schmelzen auf eine gewünschte Temperatur bzw. Halten auf einer bestimmten Temperatur,
- Einstellen einer gewünschten Zusammensetzung der im Schlackenkonditioniergefäß enthaltenen Schlackenschmelze durch Zusetzen von Zusatzstoffen, wie Kalk, Ton, Quarz, Bauxit, Feuerfest-Feinmaterial etc.,
- Abstechen der konditionierten Schlackenschmelze und
- schlackefreics Abstechen der eisenhaltigen Schmelze.

Der Eisen-, Mangan- aber auch Phosphor-Anteil der in das Schlackenkonditioniergefäß eingebrachten Hüttenreststoffe sammelt sich im Metallsumpf unter der Schlackenschmelze, welcher durch die Bodenspülung in engen Kontakt mit der Schlacke gebracht wird. Durch das Einblasen von Reduktionsmitteln, vornehmlich von Kohlenstoffträgern, wird die Reduktion der Metalle und deren Absinken in die Metallschmelze bewirkt und das Metall durch das Einbringen von Kohle auflegiert. Aufgrund des Abwanderns von Phosphor in die Metallschmelze und einer danach empfehlenswerten Entphosphorung des Roheisens können auch phosphorhältige Schlacken, wie Konverterschlacken, verwertet werden, die bisher abgegossen werden mußten und dabei ihre Wärme ungenutzt abgaben.

Vorzugsweise wird im Schlackenkonditioniergefäß Schlacke von mindestens zwei oder mehreren Abstichen eines Hochofens und/oder Abstichen eines Einschmelzvergasers zusammengeführt und behandelt. Je größer die Schlackenmenge ist, desto rentabler kann die Schlackenkonditionierung durchgeführt werden, da der Energie- und Rohstoffeintrag effizienter nutzbar ist. Zu diesem Zweck ist das kippbare oder bevorzugt feststehende Schlackenkonditioniergefäß zur Aufnahme einer sehr großen Schlackenmenge ausgelegt, wodurch sich ideale Puffermöglichkeiten für die Aufnahme von Schlacken und Reststoffen und für die Abgabe von konditionierter Schlacke ergeben.

Die Einbringung von Konverterschlacke in das Schlackenkonditioniergefäß erfolgt vorteilhaft jeweils im flüssigen Zustand, da hierbei die der Schlacke innewohnende Wärme genutzt werden kann. Die zum Aufschmelzen von fester Konverterschlacke benötigte Energie wird damit eingespart, wodurch sich die Gesamtenergiebilanz der Schlackenkonditionierung verbessert. Bisher wird die Fe- und Mn-hältige Konverterschlacke teilweise als erstarrte Stückschlacke in einer Sinteranlage eingesetzt, der größere Teil wird zur Gewinnung von Straßenbaumaterial abgegossen, wobei die Wärme beim Erstarren an die Umgebung verloren geht.

Vorzugsweise wird das Aufschmelzen von festen Einsatzstoffen in der Schlackenschmelze, der Energieeintrag für wärmeverbrauchende chemische Reaktionen und das Aufheizen der im Schlackenkonditioniergefäß enthaltenen Schmelzen auf eine gewünschte, für die Weiterverarbeitung geeignete Temperatur durch Einbringung elektrischer Energie durchgeführt, die vorteilhaft mittels einer elektrischen Widerstandsheizung erfolgt. Durch die elektrische Heizmöglichkeit besteht keine Gefahr, daß die Schlackenschmelze wegen eines zu hohen Schmelzpunktes bzw. einer zu tiefen Schlackentemperatur einfriert und den Konditionierprozeß behindert oder unterbricht.

Durch Zugabe von Zusatzstoffen steht im Schlackendreistoff- und -vierstoffsystem (CaO, SiO₂, Al₂O₃, MgO) überdies ein großes Feld für die Einstellung diverser Schlackenspezifikationen hinsichtlich der hydraulischen Eigenschaften und glasiger Erstarrung zur Verfügung, wodurch gezielt eine bestimmte Zusammensetzung mit einer bestimmten Temperatur verfügbar ist. So kann bei einer Verwendung der Schlacke für Hüttensand und in weiterer Folge für Zement durch die richtige Beschaffenheit der Schlacke der Klinkeranteil des Zements deutlich reduziert und dadurch ein positiver Beitrag hinsichtlich des Kosten- und Umweltaspekts geleistet werden.

Erfindungsgemäß wird die im Schlackenkonditioniergefäß enthaltene Schlackenschmelze zum Zweck des Entschwefelns oxidiert, vorzugsweise durch Einblasen von Sauerstoff und/oder eines sauerstoffhältigen Gases wie Luft. Das dabei entstehende SO₂ kann vorteilhaft einer Gips- oder Schwefelsäureanlage zugeführt werden, wobei bei einer Gipserzeugung eine im Gegensatz zum REA-Gips hohe Qualität erreicht wird.

Gemäß einer bevorzugten Ausführungsform werden die Hüttenreststoffe stückig und/oder feinstückig auf die Schlackenschmelze im Schlackenkonditioniergefäß aufgegeben.

Gemäß einer weiteren bevorzugten Ausführungsform werden die feinteiligen Hüttenreststoffe tief in die Schlackenschmelze und/oder die darunterliegende Eisenschmelze, vorzugsweise tiefer als 2 m, eingeblasen. Das Einblasen der Hüttenreststoffe wie auch der anderen zuzuführenden Feststoffe und Gase erfolgt vorteilhaft durch eine oder mehrere Lanzen, vorzugsweise Tauchlanzen, die in das Schlackenkonditioniergefäß einbringbar ist bzw. sind. Durch eine Eintauchtiefe der Lanzen von über 2 m wird ein vollständiges Ausreagieren und Lösen des eingeblasenen Materials bewirkt.

Vorzugsweise werden die feinteiligen Hüttenreststoffe und Reduktionsmittel durch eine gemeinsame Förderleitung und/oder Lanze mittels Koinjektion in das Schlackenkonditioniergefäß eingeblasen.

Vorteilhaft wird im Schlackenkonditioniergefäß eine Schlackenschicht von über 1 m, vorzugsweise von 2 bis 5 m Höhe, aufrechterhalten, wodurch ermöglicht wird, die Gase und Feststoffe tief in die Schlackenschicht einzubringen, um das Abgas möglichst staubfrei zu halten sowie eine ausreichende Menge an Schlackenschmelze für das schnelle Auflösen der Reststoffe und Zuschlagstoffe zu gewährleisten.

Vorzugsweise wird auch die Entsilizierungsschlacke aus der Roheisenvorbehandlung zur Schlackenkonditionierung in das Schlackenkonditioniergefäß eingesetzt. Der hohe SiO₂-Gehalt der Entsilizierungsschlacke wird durch den überwiegend basischen Schlackenanteil im Konditioniergefäß ausgeglichen und trägt dort zu einer verbesserten Viskosität bei.

Da nicht alle Hüttenreststoffe hinsichtlich ihrer Größe oder ihres Zustands für das Einbringen in das Schlackenkonditioniergefäß geeignet sind, erfolgt zweckmäßig je nach Erfordernis eine Aufbereitung der Reststoffe aus allen Betrieben des Hüttenwerks durch Sieben, Mahlen, Trocknen und dgl. in einer gemeinsamen Aufbereitungsanlage. Aufbereitungseinrichtungen für Hüttenreststoffe sind in den Hüttenwerken derzeit verstreut in verschiedenen Betrieben für das Recycling vorhanden, sofern nicht deponiert wird. Durch die Konzentration aller Aufbereitungsschritte an einer einzigen Stelle im Hüttenwerk ist eine rationellere Aufbereitung möglich.

Gemäß einer bevorzugten Ausführungsform wird das im Schlackenkonditioniergefäß entstehende Abgas gesammelt und darin enthaltenes ZnO im Staub angereichert. Das vorwiegend in Konverter- und Elektroofenstaub enthaltene ZnO wird im wesentlichen mit dem Abgas ausgetragen. Durch ein wiederholtes, gezieltes Recycling des aus dem Abgas des Schlackenkonditioniergefäßes abgetrennten Staubs erfolgt eine zunehmende Anreicherung von ZnO im Staub, bis der ZnO-Gehalt für eine Weiterverarbeitung groß genug ist und aus dem Kreislauf ausgeschieden bzw. verkauft werden kann.

Zur Weiterverarbeitung der konditionierten Schlacke wird diese beispielsweise zur Hüttensanderzeugung auf wassergekühlten Vorrichtungen vergossen. Vorzugsweise wird die dabei gewonnene Erstarrungswärme bei der Aufbereitung der Hüttenreststoffe, z.B. beim Trocknen und/oder beim Vorwärmen der Hüttenreststoffe, der Einsatzstoffe und Prozeßgase genutzt.

Vorzugsweise wird die konditionierte Schlacke zu Hüttensand, Hüttenbims oder Schlackenwolle verarbeitet, wobei solche Anlagen zweckmäßig direkt an die Schlackenkonditionierung angegliedert sind.

Eine Anlage zur Durchführung des Verfahrens ist dadurch gekennzeichnet, daß die Anlage ein einziges Schlackenkonditioniergefäß mit einem Aufnahmeraum zur Aufnahme von Hüttenschlacken sowie eine Heizvorrichtung, einen Ausguß oder eine Abstichöffnung für konditionierte Schlackenschmelze und eine Abstichöffnung für eine eisenhaltige Schmelze aufweist, wobei das Schlackenkonditioniergefäß mit Chargier- und Einblasvorrichtungen zum Einbringen von Hüttenreststoffen und Zuschlägen sowie, zum Einblasen von Mitteln für Reduktion bzw. Aufkohlung ausgestattet ist und zusätzliche Bodenspülelemente, wie poröse Spülsteine, die an ein Spülgas zuführende Leitungen angeschlossen sind, aufweist.

Gemäß einer bevorzugten Ausführungsform ist das Schlackenkonditioniergefäß kippbar ausgerührt, wobei die Eisenschmelze über einen Siphon, die Schlackenschmelze jedoch über eine Pfannenschnauze ausgießbar ist.

Gemäß einer weiteren bevorzugten Ausführungsform ist das Schlackenkonditioniergefäß feststehend ausgeführt, wobei die Eisenschmelze und die Schlackenschmelze getrennt über Abstichöffnungen mittels Schieber-Abstichsystem abstechbar sind.

Vorzugsweise ist als Heizvorrichtung eine elektrische Widerstandsheizung vorgesehen.

Zum Einblasen von Gasen und Feststoffen, wie Hüttenreststoffen, sind vorteilhaft eine oder mehrere Lanzen, vorzugsweise Tauchlanzen, welche in das Schlackenkonditioniergefäß einbringbar sind, vorgesehen, wodurch diese Stoffe leicht sehr tief in die Schlacken- oder Metallschmelze eingebracht werden können.

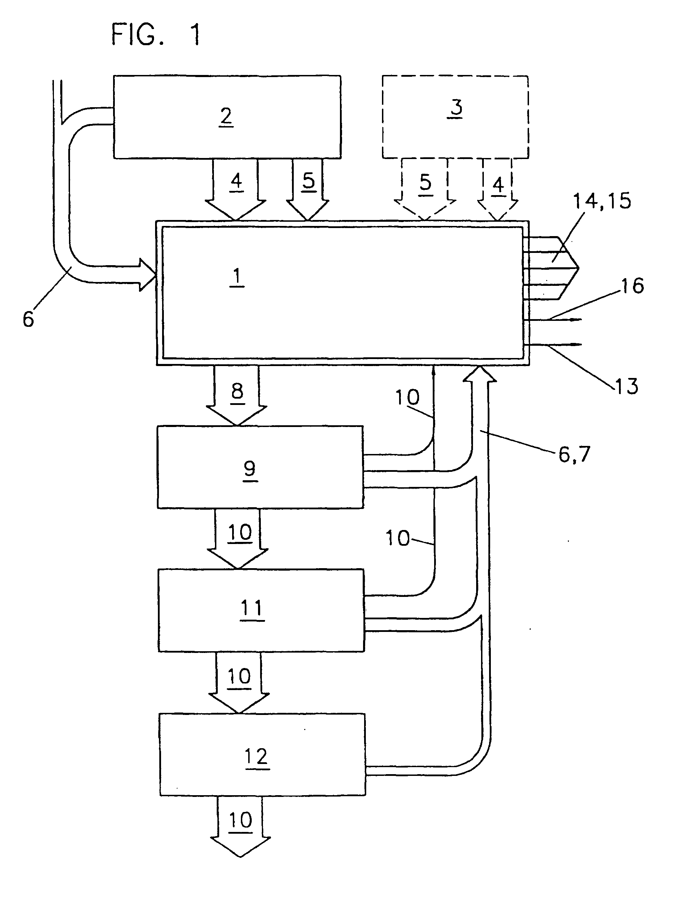

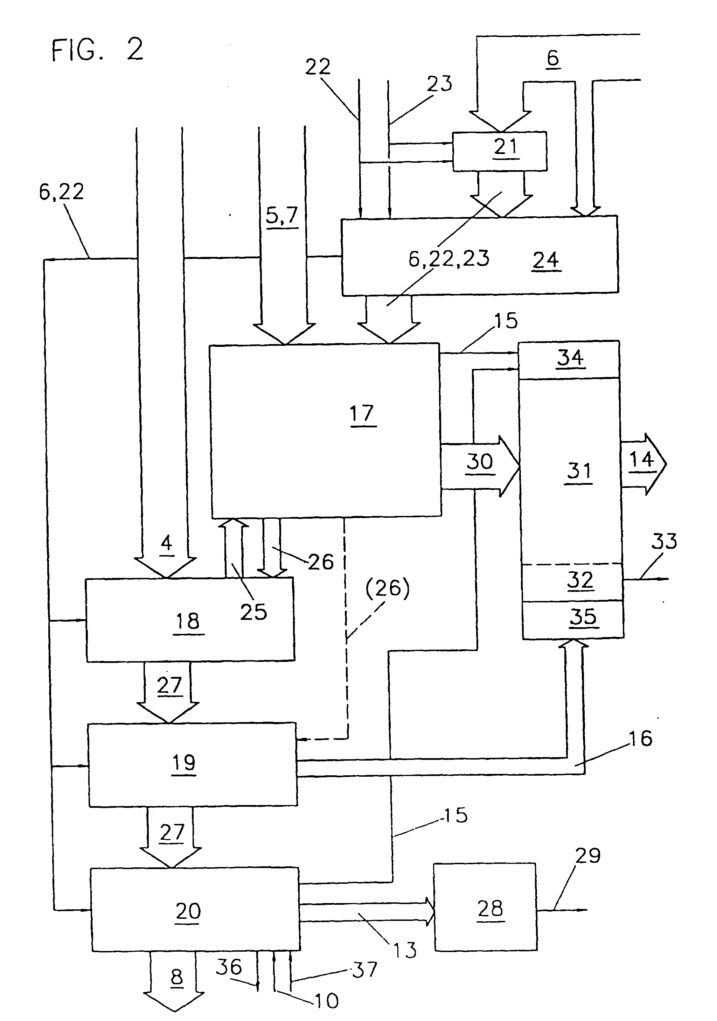

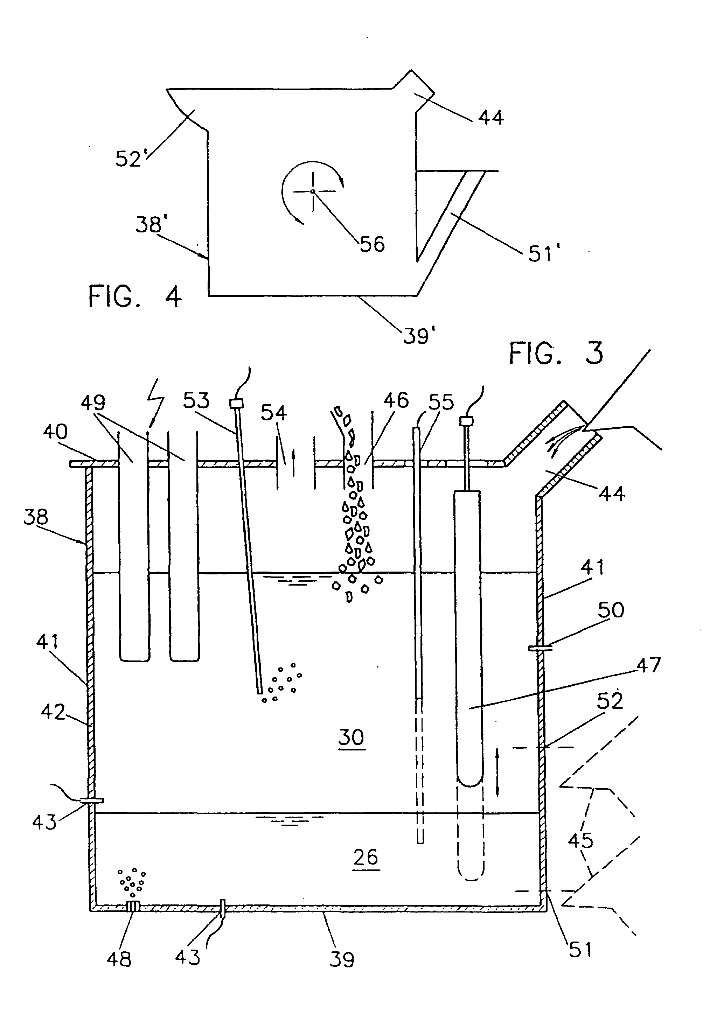

Die Erfindung ist nachfolgend anhand der Fig. 1 bis 4 näher erläutert, wobei Fig. 1 ein Schema eines kombinierten Roheisen/Schlacken/Reststoffe-Konditionierungsbetriebes in einem Hüttenwerk, Fig. 2 eine schematische Darstellung des erfindungsgemäßeri Verfahrens in Verbindung mit der Roheisen/Schlacken/Reststoffe-Verarbeitung aus Fig. 1 im Detail in Blockdarstellung und die Fig. 3 und 4 eine schematische Darstellung der erfindungsgemäßen Anlage zeigen.

Gemäß Fig. 1 werden in einem Roheisen/Schlacken/Reststoffe-Konditionierungsbetrieb 1 sämtliches von einem Hochofen 2 und/oder von einem Einschmelzvergaser 3 abgestochenes Roheisen 4 und abgestochene Schlacke 5 gemeinsam mit sämtlichen in einem Hüttenwerk anfallenden Reststoffen 6, wie Stäuben, Schlämmen, Zunder, Feuerfestmaterial etc., die gegebenenfalls auch aus einem anderen Stahlwerk oder von einer bestehenden Schlackendeponie stammen können, und Schlacken 7, wie Konverterschlacke, Pfannenschlacke usw., verarbeitet, wobei Schlacken 5, 7 und Hüttenreststoffe 6 zusammen in einem metallurgischen Gefäß erfindungsgemäß konditioniert und daneben Roheisen 4 nach an sich bekannten Verfahren getrennt davon in eigenen Gefäßen vorbehandelt werden.

Das Roheisen 4 kann gemeinsam mit dem aus den Schlacken 7 und Hüttenreststoffen 6 stammenden Eisen bestens konditioniert, d.h. komplett schlackefrei, tiefentschwefelt, gegebenenfalls entsiliziert und entphosphort, mit exakt eingestellter Temperatur, mit exaktem Gewicht und bestimmtem C-Gehalt, zu einem gewünschten Zeitpunkt als vorbehandeltes Roheisen 8 einem Konverter 9 oder anderen stahlerzeugenden Vorrichtungen, beispielsweise einem Elektroofen, angeliefert werden, von wo es dann als fertiger Stahl 10 einer Stranggußanlage 11 und in weiterer Folge einem Walzwerk 12 zugeführt wird. Weiters kann es aber auch zur Herstellung von Spezialroheisen 13, wie für Massel oder Granalien, konditioniert werden, um die Pufferfähigkeit des Betriebes zwischen Hochofen und Stahlwerk zu vergrößern.

Die im Roheisen/Schlacken/Reststoffe-Konditionierungsbetrieb 1 aus Schlacken 5, 7 und Hüttenreststoffen 6 durch Konditionieren erzeugten Vorprodukte 14, wie Hüttensand, Hüttenbims und Hüttenwolle, sowie gezielt hergestelltes Schwefeldioxid 15 werden einer weiteren Verwertung zugeführt. So können die Vorprodukte 14 in der Baustoffindustrie, z.B. bei der Zementherstellung, und Schwefeldioxid 15 zur Erzeugung von Gips oder Schwefelsäure eingesetzt werden.

Die im Zuge der Roheisen-Konditionierung im Roheisen/Schlacken/Reststoffe-Konditionierungsbetrieb 1 beim Entphosphom des Roheisens 4 oder nur des P-hältigen Metallsumpfes aus dem Konditioniergefäß anfallende P-reiche Schlacke 16 ist zur Erzeugung von Düngemitteln verwendbar. Der P-Gehalt der Schlacke 16 kann durch Wiedereinsatz der Schlacke 16 in das Konditioniergefäß angereichert werden.

Der in Fig. 2 dargestellten Schlackenkonditionierung 17 werden sämtliche flüssige Schlacken 5, 7, insbesondere Hochofen-Schlacken 5, Schlacken 5 aus einem Einschmelzvergaser 3 und Schlacken 7 aus dem Stahlwerk, wie Konverterschlacken usw., zugeführt. Durch die Zuführung der Schlacken 5 und teilweise auch der Schlacken 7 im flüssigen Zustand wird die ihnen innewohnende Energie für die Schlackenkonditionierung 17 nutzbar gemacht und der Konditionierungsprozeß beschleunigt.

Die Schlackenkonditionierung 17 ist für den Durchsatz auch großer Produktionsmengen aus mehreren Hochöfen 2, Konvertern 9 etc. vorgesehen, wobei die Konditionierung in einem oder mehreren Gefäßen, vorteilhaft jeweils für das Schlackenvolumen von zwei oder mehreren Abstichen aus einem Hochofen 2 und/oder Einschmelzvergaser 3, erfolgt. Dieses große Volumen der Behandlungsgefäße stellt eine ideale Konditioniermöglichkeit und einen sehr vorteilhaften Puffer im Stofffluß dar.

Der Transport der Schlacken 5, 7 - möglichst im flüssigen Zustand - von ihrem Entstehungsort zum Ort der Schlackenkonditionierung 17 erfolgt beispielsweise mittels Straßentransports in offenen Pfannen. Hochofenschlacke 5 und Roheisen 4 können in gemeinsamen Gefäßen transportiert werden. Die Schlacke 5 wird durch Abgießen zwar von Roheisen getrennt, wobei jedoch ein geringes Mitlaufen von Roheisen 4 ins Schlackenkonditioniergefäß akzeptabel ist. Stahlwerksschlacke 7 kann einen Rest von Stahl 10 (Fig. 1) enthalten. Die relativ geringe Mitlaufmenge an Stahl 10 in den Stahlwerksschlacken 7 wird zusammen mit der Mitlaufmenge an Roheisen 4 in den Metallsumpf aufgenommen.

Das von Schlacke 5 getrennte Roheisen 4 selbst wird einer Roheisenvorbehandlung zugeführt, die immer eine Entschwefelung 20 und, wenn das gesamte Roheisen generell entphosphort wird, eine Entsilizierung 18 und eine Entphosphorung 19 umfaßt. Durch Kombination von Schlackenkonditionierung 17 und Roheisenvorbehandlung 18, 19, 20 in einem gemeinsamen Betrieb, völlig losgelöst vom Verantwortungsbereich der Roheisenerzeugung und des Stahlwerks, können erhebliche Synergieeffekte genutzt werden, was wie folgt beschrieben wird:

In einem der Schlackenkonditionierung 17 vorangestellten Schritt findet eine Aufbereitung 21 statt, die sowohl die im Schlackenkonditionierprozeß 17 eingesetzten Hüttenreststoffe 6, wie Stäube, Zunder, Schlämme, feste Schlacken etc., als auch zur Konditionierung erforderliche Zuschlagstoffe 22, wie Kalk, Ton, Quarz, Bauxit usw., aber auch Reduktionsmittel 23, insbesondere Kohlenstoff 23, für die Reduktion und das Aufkohlen des sich unter der Schlacke bildenden Metallsumpfes umfassen kann. Diese Stoffe 6, 22, 23 werden, soweit erforderlich, im Zuge der Aufbereitung 21 einer Trocknung und/oder Zerkleinerung unterzogen, beispielsweise gemahlen, gesiebt, gemischt usw.

Für alle aufzubereitenden Materialien sowie den aufbereiteten und den Materialien, die ohne Aufbereitung 21 einsetzbar sind, wird eine Lagerung 24, beispielsweise in Silos, in einer Lagerkapazität vorgesehen, die eine gezielte, kontrollierte Auslieferung der stückigen und pulverförmigen/feinstückigen Materialien zum Konditioniergefäß und zur Roheisenvorbehandlung erlaubt.

Die Hüttenreststoffe 6, Zuschlagstoffe 22 und Reduktionsmittel 23 werden aus dem Lager 24 der Schlackenkonditionierung 17 zugeführt. Einsatzstoffe 6, 22, beispielsweise Kalk, Zunder etc., werden außerdem den Roheisenvorbehandlungsschritten 18, 19, 20 zum Aufbau einer Schlacke zugeführt, deren Menge vorteilhaft für mehrere Roheisenbehandlungen 18, 19 ausreicht und au fgrund der größeren Schlackenbadtiefe ein spritzer- und raucharmes Arbeiten während des Einblasens bei der Entsilizierung 18 und der Entphosphorung 19 erleichtert.

Die Entsilizierung 18 ist der erste Schritt der Roheisenvorbehandlung 18, 19, 20 und beinhaltet die Oxidation eines Großteils des im Roheisen 4 enthaltenen Siliziums, wobei die Entsilizierungsbehandlung eine bekannte Technologie ist und das Zusetzen von gasförmigen und festen Sauerstoffträgern, wie Kalk und dgl., umfaßt. Die im Zuge der Entsilizierung 18 mit SiO₂ angereicherte Entsilizierungsschlacke 25, deren Menge zur Durchführung von mehreren Entsilizierungsbehandlungen erhöht sein kann, kann problemlos in das große Gesamtschlackenvolumen der Schlackenkonditionierung 17 aufgenommen und damit genutzt werden. Im Gegenzug dazu gelangt die bei der Schlackenkonditionierung 17 aus den eisenhältigen Hüttenreststoffen 6 und dem mit der Schlacke 5 eingebrachten eisenhältigen Material entstehende "Roheisenschmelze" 26 in ein Gefäß für die Entsilizierung 18 und durchläuft dann als mit dem aus dem Hochofen 2 und/oder Einschmelzvergaser 3 stammenden Roheisen 4 vereintes Roheisen 27 die weiteren Roheisenvorbehandlungsschritte 19, 20. Die Roheisenschmelze 26 aus dem Metallsumpf des Konditioniergefäßes kann aber auch gleich der Entphosphorung 19 zugeführt werden.

Bei den Roheisenvorbehandlungsschritten 18, 19,.20 kann auf ähnliche Weise wie bei der Schlackenkonditionierung 17 gearbeitet werden, d.h. mit zur Aufnahme von einer großen Roheisenmenge und einer großen Schlackenmenge ausgelegten, vorzugsweise jeweils mehr als ein Konverterchargiergewicht fassenden, feststehenden oder kippbaren metallurgischen Gefäßen, die überdies beheizbar sind. Ein Siphon beim kippbaren (Fig. 4) und ein Schieberverschlußausguß beim feststehenden Gefäß (Fig. 3) ermöglichen ein komplett schlackefreies Abstechen des Roheisens 27 aus dem jeweiligen Behandlungsgefäß in eine Chargierpfanne und damit ein schlackefreies Umfüllen des Pfanneninhalts ins nächste Behandlungsgefäß, so daß das Roheisen 27 nach der Entschwefelung 20 nahezu schwefelfrei, phosphorarm, mit exakter, auch höherer Temperatur und in exakter Menge und aufgrund der Pufferwirkung der großen Gefäße zu einer bestimmten Zeit als konditioniertes Roheisen 8 dem Stahlwerk anlieferbar ist. Es besteht auch die Möglichkeit, dem Roheisen 8 gezielt Schlacke mit einem exakten Gewicht mitzuschicken. Dazu wird Schlacke aus dem höherliegenden Abstichloch oder über eine Ausgußschnauze des metallurgischen Gefäßes automatisch abgezogen. Ebenso ist gezielt Spezialroheisen 13 für die Herstellung 28 eines erstarrten Produkts 29, wie Roheisenmasseln oder Granalien, für die Gießereiindustrie erzeugbar.

Die konditionierte Schlackenschmelze 30 wird einer Schlackenverarbeitungsanlage zur Erzeugung 31 von Vorprodukten 14, wie Hüttensand, Hüttenbims oder Hüttenwolle zugeführt, wobei bei der Herstellung von Hüttensand durch Vergießen der Schlackenschmelze 30 auf wassergekühlten Vorrichtungen ein großer Teil der Schlackenwärme zurückgewonnen und unter anderem im Zuge der Aufbereitung 21 für Trocknungs- und Vorwärmzwecke genutzt werden kann. Die Erzeugung 31 ist zweckmäßig an die Schlackenkonditionierung 17 angegliedert. Die aus der Schlackenschmelze 30 gewonnenen Vorprodukte 14, wie Hüttensand, -bims und -wolle, werden als Rohprodukte in der Bau- bzw. Zementindustrie eingesetzt. Ein Teil der konditionierten Schlackenschmelze 30 kann bei Bedarf durch Abgießen 32 zu Schlacke 33 für den Einsatz in einer Sinteranlage verarbeitet werden.

Das bei der Schlackenkonditionierung 17 durch Entschwefelung entstehende sowie das bei der Entschwefelung 20 des Roheisens 27 anfallende SO₂ 15 dient vorteilhaft als Rohstoff für eine Gips- oder Schwefelsäureherstellung 34.

Bei der nach einer bekannten Technologie durchgeführten Entphosphorung 19 wird mit einem großen Gefäß mit großen Roheisen- und Schlackenmengen gearbeitet. Die große Schlackenmenge hat neben dem Vorteil des großen Entphosphorungspotentials auch den Vorteil, daß gasabspaltende feste Sauerstoffträger mit weniger Spritzer- und Rauchbildung eingeblasen bzw. zugesetzt werden können. Für das Abstechen von entphosphortem Roheisen 27 und Schlacke 16 mit ausreichend hohem Phosphorgehalt sind Pfannenkippschnauzen oder bei feststehendem Gefäß Schieber-Abstiche vorgesehen, durch die die Schmelzen in eine im Pfannenlift sitzende Pfanne geleert werden können. Die bei der Entphosphorung 19 anfallende P-reiche Schlacke 16 kann ähnlich wie bei der Schlackenkonditionierung 17 für eine Düngemittelherstellung 35 bezüglich ihrer Zusammensetzung und Temperatur entsprechend konditioniert werden, wodurch eine Deponierung dieser Schlacke 16 ebenfalls vermieden wird. Zum Aufbau der zur Entphosphorung 19 eingesetzten Schlacke kann auch flüssige Konverterschlacke verwendet werden. Die Roheisenentphosphorung 19 ermöglicht das Recycling der P-führenden Konverterschlacke. Erst mit der Synergie Schlackenbehandlung/Recycling/Roheisenvorbehandlung kann das thermische und chemische (Fe, Mn) Potential der Konverterschlacke ideal genutzt werden.

Bei der Entschwefelung 20 des Roheisens 27 wird ein Verfahren nach dem System Dr. MORE, zum Beispiel aus der EP 0 627 012 B1 bekannt, angewandt, bei dem das große Volumen der synthetischen Entschwefelungschlacke 36 immer wieder regeneriert wird, sobald das Entschwefelungsvermögen zu gering ist, und dauernd im Gefäß bleibt, wodurch für die Entschwefelung 20 nur verschwindend kleine spezifische Mengen [kg/t Roheisen] an Schlackenbildnern nötig sind, um eine genaue Einhaltung einer exakt gleichbleibenden Schlackenanalyse zu gewährleisten, und eine Beseitigung der Entschwefelungsschlacke 36 entfällt. Weiters kann auch ein Teil der Entschwefelungsschlacke 36 gezielt als Schlacke in einem Pfannenofen bei der Stahlerzeugung eingesetzt werden. In diesem Fall wird die gesamte Pfannenschlacke 37 zusammen mit Reststahl 10 bevorzugt flüssig an die Entschwefelungsanlage zurückgeliefert.

Das in Fig. 3 schematisch dargestellte, zur Aufnahme der Schlacken 5, 7 sowie der Hüttenreststoffe 6 geeignete, feststehende Schlackenkonditioniergefäß 38 mit einem Boden 39, einem Deckel 40 und einer Seitenwand 41 ist mit Feuerfestmaterial 42 ausgemauert und ausreichend gegen zu starken Wärmeverlust isoliert. Im Boden 39 und in der Seitenwand 41 sind in ausreichender Anzahl Sensoren 43 eingebaut, die einen frühzeitigen örtlichen Verschleiß der Feuerfestausmauerung 42 melden.

Die Größe des Schlackenkonditioniergefäßes 38 ist so gewählt, daß eine große Menge an Schlacke 5, 7 aufgenommen werden kann, vorteilhaft zwei oder mehrere Abstiche eines Hochofens 2 und/oder Einschmelzvergasers 3. In diesem großen Volumen sind auch die übrigen Reststoffe 6 und Schlacken 7 des Hüttenwerks (Stahlwerksschlacken, Stäube, Zunder etc.) leicht unterzubringen.

Der Deckel 40 weist eine gegebenenfalls verschließbare Öffnung 44 auf, durch die flüssig vorliegende Schlacken 5, 7 in das Schlackenkonditioniergefäß 38 gegossen werden können. Die Anlieferung dieser Schlacken 5, 7 erfolgt beispielsweise mittels Straßentransports in gut isolierten Pfannen 45, die mit Hilfe eines mit einer Kipp- und Wiegeeinrichtung ausgestatteten, über Fernbedienung gesteuerten Pfannenlifts über das Schlackenkonditioniergefäß 38 gehoben und zum Chargieren gekippt werden.

Weiters weist der Deckel 40 eine Öffnung 46 für die Zugabe von stückigem Material 6, 7, 22, 23, wie zum Beispiel grobem Zunder oder stückiger Schlacke, auf. Das für den Aufbau der konditionierten Schlacke zum Einsatz kommende Material wird zugabefertig oder einblasfertig in Silos gelagert und pneumatisch oder mittels Vibrorinnen, Förderbänder etc. mit kontrollierter Leistung chargiert. Die Zugabe des einzubringenden Materials 6, 22, 23 erfolgt entweder feinstückig durch die Öffnung 46 oder über Pulver-/Feinkorn-Einblasen mittels einer oder mehrerer durch den Deckel 40 des Schlackenkonditioniergefäßes 38 ragender Lanzen 47, vorzugsweise Tauchlanzen, in Mono- oder Koinjektion, wobei Eintauchtiefe, Einblaseleistung und -dauer exakt eingestellt werden können.

Die Schlacken 5, 7 bilden im Schlackenkonditioniergefäß 38 eine Schlackenschmelze 30, die eine Höhe von über 1 m, vorzugsweise 2 bis 5 m, aufweist. Eine derart hohe Schlackenschmelze 30 ermöglicht ein besonders tiefes Einbringen von Stoffen 6, 22, 23 sowie Gasen über die Lanze(n) 47, wodurch das Lösen und das Reagieren der eingebrachten Stoffe 6, 22, 23 mit der Schlacke 5, 7 durch den erhöhten Reaktionsweg begünstigt wird. Unterhalb der Schlackenschmelze 30 bildet sich eine Roheisenschmelze 26 aus, die eine Höhe von bis zu 2 m aufweist und durch Reduktion des in den Schlacken 7 bzw. in den Hüttenreststoffen 6 enthaltenen Eisens mittels des eingeblasenen Reduktionsmittels 23 und durch das Einbringen von Reststahl 10 und mitgelaufenem Roheisen 4 entsteht.

Der Boden 39 des Schlackenkonditioniergefäßes 38 weist Bodenspülelemente 48, beispielsweise poröse Spülsteine, auf, die durch Einblasen von Spülgas die Schlackenschmelze 30 und die Roheisenschmelze 26 durchmischen und in engen Kontakt miteinander bringen und zu einem chemischen und thermischen Ausgleich führen. Zweckmäßig besitzen die Bodenspülelemente 48 eine zum Ausreagieren der eingeblasenen Materialien oder der auf die Schlackenschmelze 30 aufgegebenen Stoffe 6, 22, 23 optimale Einstellung.

Zur Aufrechterhaltung des geschmolzenen Zustands der Schmelzen 26, 30 und zum Aufschmelzen und Lösen der in das Schiackenkonditioniergefäß 38 eingebrachten Stoffe 6, 22, 23 sowie zur Temperatureinstellung der konditionierten Schlackenschmelze 30 dienen Tauchelektroden 49, die eine elektrische Widerstandsheizung bilden. Von besonderer Bedeutung ist die Abführung der thermischen Energie von den Tauchelektroden 49 weg während der Widerstandsheizung. Temperaturmeßeinrichtungen 50 in der Seitenwand 41 des Schlackenkonditioniergefäßes 38 überwachen neben der Temperatur der Schlackenschmelze 30 und der Roheisenschmelze 26 auch deren Höhe.

Weist die Roheisenschmelze 26 eine bestimmte Höhe auf, wird sie über ein Abstichloch 51 automatisch in eine Pfanne 45 im Pfannenlift abgestochen und der Roheisenvorbehandlung 18, 19, 20 zugeführt. Bei einem kippbaren Gefäß 38' ist das Abstichloch 51 ein Siphon 51' (Fig. 4). Auf diese Weise kann das Abstechen, aber auch Chargieren der Schmelzen 26, 30 kranunabhängig erfolgen. Für die Schlackenschmelze 30 ist bei feststehendem Gefäß oberhalb des Abstichlochs 51 in der Seitenwand 41 eine weitere Abstichöffnung 52 vorgesehen, bei kippbarem Gefäß 38' wird auf der dem Siphon 51' gegenüberliegenden Seite über eine Schnauze 52' ausgeleert. Bei vollständiger Entleerung des Schlackenkonditioniergefäßes 38, zum Beispiel für Reparaturarbeiten, erfolgt der Abstich der Schlackenschmelze 30 ebenfalls über das Abstichloch 51. Arbeiten an einem Schiebersystem der Abstichöffnungen 51, 52 können von einer Plattform des Pfannenlifts aus vorgenommen werden.

Zum Entschwefeln der Schlackenschmelze 30 kann über eine Sauerstofflanze 53, die den Deckel 40 des Schlackenkonditioniergefäßes 38 durchragt, Sauerstoff oder ein sauerstoffhältiges Gas in die Schlackenschmelze 30 eingeblasen werden.

Die bei der Schlackenkonditionierung 17 und beim Hüttenreststoffrecycling entstehenden Abgase werden über eine Öffnung 54 im Deckel 40 des Schlackenkonditioniergefäßes 38 abgesaugt und einer Entstaubungsanlage oder im Fall einer Entschwefelung der Schlacke einer Gips- oder Schwefelsäureanlage zugeführt. Bei einer Wiederverwertung von Konverterstaub im Schlackenkonditioniergefäß 38 kann das im Staub enthaltene ZnO, das mit dem Abgas ausgetragen wird, durch wiederholtes Abtrennen des aus dem Abgas abgeschiedenen Staubs und erneutes Einblasen desselben in das Schlackenkonditioniergefäß 38 angereichert werden. Das Abgassystem ist so konzipiert, daß das bei der Reduktion entstehende CO in geeigneter Weise verbrannt wird und daß gegebenenfalls frei werdende Cl-Verbindungen ohne Dioxinbildung verbrannt werden.

Für die Probenahme und als zusätzliche Temperaturmeßeinrichtung steht eine mechanisiert in die Schlackenschmelze 30 und Roheisenschmelze 26 eintauchende Lanze 55 zur Verfügung. Mittels aufgesteckter Sonden wird dabei die Temperatur gemessen und eine Probe gezogen.

Fig. 4 zeigt ein kippbares Schlackenkonditioniergefäß 38', das an einer Achse 56 kippbar gelagert ist. Zum Abgießen der Schlackenschmelze 30 weist das Schlackenkonditioniergefäß 38' an einem oberen Rand eine Schnauze 52' auf. Der Schnauze 52' gegenüberliegend befindet sich ein seitlich vom Boden 39' nach oben wegstehender, als Rohr ausgebildeter Siphon 51', über den die Eisenschmelze 26 schlackefrei abgegossen wird. Ein derart ausgebildetes metallurgisches Gefäß 38' kann auch bei den Roheisenvorbehandlungsschritten 18, 19, 20 verwendet werden.

Das besondere an der Erfindung ist die Anlieferung von Roheisen und Schlacke vom Hochofen in gemeinsamen Pfannen, wobei die Trennung durch Abkippen der Schlacke in das Schlackenkonditioniergefäß erfolgt, weiters die gemeinsame Nutzung der

Aufbereitungsanlage für die Roheisen- und Schlackenbehandlung und die direkte "Entsorgung" der bei der Roheisenbehandlung anfallenden Schlacken von der Entsilizierung und teilweise auch von der Entphosphorung in das Schlackenkonditioniergefäß sowie die Möglichkeit der direkten Einbindung des Metalls aus der Reduktion in den Roheisenfluß.

Die wesentlichsten Vorteile der Erfindung werden nachfolgend noch einmal aufgezählt:
- Komplette Rückgewinnung von Eisen und Mangan aus allen Hüttenreststoffen, wie Stäuben, Schlämmen, festen Schlacken, Zunder, Feuerfest-Ausbruch etc.
- Konverter- und Pfannenschlacken werden flüssig recycliert, wobei die Wärme genutzt wird. Das Problem des Phosphors beim Recycling der Konverterschlacke wird durch die Erfindung gelöst.
- Nutzung bedeutender Synergieeffekte durch Kombination der Konditionierung der gesamten Roheisenmenge sowie aller Schlacken von Hochofen und Stahlwerk in einem gemeinsamen Betrieb, komplett losgelöst vom Verantwortungsbereich von Hochofen und Stahlwerk.
- Durch große Roheisen- und Schlacke-Schmelzeinheiten mit elektrischer Heizmöglichkeit ergeben sich ideale Konditionier- und Puffermöglichkeiten.
- Die sehr großen Badhöhen in den feststehenden oder kippbaren Gefäßen erlauben durch Tiefeinblasen ein sehr umweltfreundliches (kein Dioxin etc.) und umfassendes Recycling aller Stäube und dgl.
- Der Hochofen bzw. der Einschmelzvergaser bekommt keine Vorgaben bezüglich Roheisen- und Schlackenanalysen. Das Stahlwerk kann ganz präzise Forderungen hinsichtlich Analyse, Temperatur, Menge und Anlieferungszeitpunkt des Roheisens stellen.

## Patentansprüche

1. Verfahren zur Schlackenkonditionierung (17) und zum Hüttenreststoffrecycling in der Eisenhüttenindustrie, **gekennzeichnet durch** folgende Schritte:
• Zusammenführen und Behandeln von mindestens einer Schlacke (5) aus der Gruppe von Schlacken mindestens eines Abstiches eines Hochofens (2) oder eines Einschmelzvergasers (3) eines Direktreduktionsverfahrens im flüssigem Zustand und von mindestens einer Schlacke (5) aus der Gruppe von sonstigen Hüttenschlacken (7), wie Elektroofenschlacke, Konverterschlacke, Pfannenschlacke, aus einem Stahlwerk und Schlacken von einer Roheisenvorbehandlung (18, 19) in einem Schlackenkonditioniergefäß (38),
• Einbringen von Hüttenreststoffen (6), vorzugsweise allen Hüttenreststoffen (6), wie Hüttenstäuben, Zunder, Hüttenschlämmen, mit Ausnahme von Beizschlämmen in das Schlackenkonditioniergefäß (38),
• Einblasen von Reduktionsmittel (23), vorzugsweise zusammen mit feinteiligen Hüttenreststoffen (6) **durch** Koinjektion, in das Schlackenkonditioniergefäß (38) zum Ausreagieren der eingebrachten Stoffe, insbesondere Reduzieren der eisenhältigen Reststoffe (6),
• Einbringen von Kohlenstoff (23) zum Auflegieren des reduzierten Eisens aus den eisenhältigen Reststoffen (6),
• Rühren der im Schlackenkonditioniergefäß (38) enthaltenen Schmelzen (26, 30) **durch** Einblasen von Spülgas über Bodenspülelemente (48) des Schlackenkonditioniergefäßes (38),
• Aufheizen der im Schlackenkonditioniergefäß (38) enthaltenen Schmelzen (26, 30) auf eine gewünschte Temperatur bzw. Halten auf einer bestimmten Temperatur,
• Einstellen einer gewünschten Zusammensetzung der im Schlackenkonditioniergefäß (38) enthaltenen Schlackenschmelze (30) **durch** Zusetzen von Zusatzstoffen (22), wie Kalk, Ton, Quarz, Bauxit, Feuerfest-Feinmaterial etc.,
• Abstechen der konditionierten Schlackenschmelze (30) und
• schlackenfreies Abstechen der eisenhaltigen Schmelze (26).

2. Verfahren nach Anspruch 1, **dadurch gekennzeichnet, daß** im Schlackenkonditioniergefäß (38) Schlacke (5) von mindestens zwei oder mehreren Abstichen eines Hochofens (2) und/oder Abstichen eines Einschmelzvergasers (3) zusammengeführt und behandelt wird.

3. Verfahren nach Anspruch 1 oder 2, **dadurch gekennzeichnet, daß** die Konverterschlacke im flüssigen Zustand in das Schlackenkonditioniergefäß (38) eingebracht wird.

4. Verfahren nach einem oder mehreren der Ansprüche 1 bis 3, **dadurch gekennzeichnet, daß** das Aufschmelzen von festen Einsatzstoffen in der Schlackenschmelze, der Energieeintrag für wärmeverbrauchende chemische Reaktionen und das Aufheizen der im Schlackenkonditioniergefäß (38) enthaltenen Schmelzen (26, 30) auf eine geeignete Temperatur durch Einbringung elektrischer Energie durchgeführt wird.

5. Verfahren nach einem oder mehreren der Ansprüche 1 bis 4, **dadurch gekennzeichnet, daß** die im Schlackenkonditioniergefäß (38) enthaltene Schlackenschmelze (30) zum Zweck des Entschwefelns oxidiert wird, vorzugsweise durch Einblasen von Sauerstoff und/oder Einblasen eines sauerstoffhältigen Gases, wie Luft.

6. Verfahren nach einem oder mehreren der Ansprüche 1 bis 5, **dadurch gekennzeichnet, daß** die Hüttenreststoffe (6) stückig und/oder feinstückig auf die Schlackenschmelze (30) im Schlackenkonditioniergefäß (38) aufgegeben werden.

7. Verfahren nach einem oder mehreren der Ansprüche 1 bis 6, **dadurch gekennzeichnet, daß** feinteilige Hüttenreststoffe (6) tief, vorzugsweise tiefer als 2 m, in die Schlackenschmelze (30) und/oder die darunterliegende Eisenschmelze (26) eingèblasen werden.

8. Verfahren nach einem oder mehreren der Ansprüche 1 bis 7, **dadurch gekennzeichnet, daß** feinteilige Hüttenreststoffe (6) und Reduktionsmittel (23) durch eine gemeinsame Förderleitung und/oder Lanze (47) mittels Koinjektion in das Schlackenkonditioniergefäß (38) eingeblasen werden.

9. Verfahren nach einem oder mehreren der Ansprüche 1 bis 8, **dadurch gekennzeichnet, daß** das Schlackenkonditioniergefäß (38) mittels einer elektrischen Widerstandsheizung beheizt wird.

10. Verfahren nach einem oder mehreren der Ansprüche 1 bis 9, **dadurch gekennzeichnet, daß** im Schlackenkonditioniergefäß (38) eine Schlackenschicht (30) von über 1 m, vorzugsweise von 2 bis 5 m Höhe, aufrechterhalten wird.

11. Verfahren nach einem oder mehreren der Ansprüche 1 bis 10, **dadurch gekennzeichnet, daß** die Entsilizierungsschlacke (25) aus der Roheisenkonditionierung in das Schlackenkonditioniergefäß (38) eingesetzt wird.

12. Verfahren nach einem oder mehreren der Ansprüche 1 bis 11, **dadurch gekennzeichnet, daß** die Hüttenreststoffe (6) aus allen Betrieben des Hüttenwerks durch Sieben, Mahlen, Trocknen und dgl. in einer gemeinsamen Aufbereitungsanlage aufbereitet werden.

13. Verfahren nach einem oder mehreren der Ansprüche 1 bis 12, **dadurch gekennzeichnet, daß** das im Schlackenkonditioniergefäß (38) entstehende SO₂ (15) einer Gips- oder Schwefelsäureanlage zugeführt wird.

14. Verfahren nach einem oder mehreren der Ansprüche 1 bis 13, **dadurch gekennzeichnet, daß** im Schlackenkonditioniergefäß (38) entstehendes Abgas gesammelt und darin enthaltenes ZnO im Staub angereichert wird.

15. Verfahren nach einem oder mehreren der Ansprüche 1 bis 14, **dadurch gekennzeichnet, daß** die konditionierte Schlacke (30) vergossen wird und dabei gewonnene Erstarrungswärme bei der Aufbereitung (21), z.B beim Trocknen, und/oder beim Vorwärmen der Hüttenreststoffe (6), der Einsatzstoffe (22, 23) und Prozeßgase, genutzt wird.

16. Verfahren nach einem oder mehreren der Ansprüche 1 bis 15, **dadurch gekennzeichnet, daß** die konditionierte Schlacke (30) zu Hüttensand, Hüttenbims oder Schlackenwolle verarbeitet wird.

17. Anlage zur Durchführung des Verfahrens nach einem oder mehreren der Ansprüche 1 bis 16, **dadurch gekennzeichnet, dass** die Anlage ein einziges Schlackenkonditioniergefäß (38) mit einem Aufnahmeraum zur Aufnahme von Hüttenschlacken (5, 7) sowie eine Heizeinrichtung, einen Ausguss oder eine Abstichöffnung (52) für konditionierte Schlackenschmelze (30) und eine Abstichöffnung (51) für eine eisenhältige Schmelze (26) aufweist, wobei das Schlackenkonditioniergefäß (38) mit Chargier- und Einblasvorrichtungen zum Einbringen von Hüttenreststoffen (6) und Zuschlägen (22) sowie zum Einblasen von Mitteln (23) für Reduktion bzw. Aufkohlung ausgestattet ist und zusätzliche Bodenspülelemente (48), wie poröse Spülsteine, die an ein Spülgas zuführende Leitungen angeschlossen sind, aufweist.

18. Anlage nach Anspruch 17, **dadurch gekennzeichnet, daß** das Schlackenkonditioniergefäß (38') kippbar ausgeführt ist, wobei die Eisenschmelze (26) über einen Siphon (51'), die Schlackenschmelze (30) jedoch über eine Pfannenschnauze (52') ausgießbar ist.

19. Anlage nach Anspruch 17, **dadurch gekennzeichnet, daß** das Schlackenkonditioniergefäß (38) feststehend ausgeführt ist, wobei die Eisenschrnelze (26) und die Schlackenschmelze (30) getrennt über Abstichöffnungen (51, 52) mittels Schieber-Abstichsysteme abstechbar sind.

20. Anlage nach einem der Ansprüche 17 bis 19, **dadurch gekennzeichnet, daß** als Heizvorrichtung eine elektrische Widerstandsheizung vorgesehen ist.

21. Anlage nach einem der Ansprüche 17 bis 20, **dadurch gekennzeichnet, daß** eine oder mehrere Lanzen (47), vorzugsweise Tauchlanzen, zum Einblasen von Gasen und/oder Feststoffen, wie Hüttenreststoffen (6), vorgesehen sind, die in das Schlackenkonditioniergefäß (38) einbringbar sind.

## Claims

1. Process for conditioning slags (17) and for recycling metallurgical remainder materials produced in the iron industry, **characterized by** the following steps:
• combining and treating at least one slag (5) from the group of slags from at least one tap of a blast furnace (2) or of a melter gasifier (3) used in a direct reduction process, in the liquid state, and at least one slag (5) from the group of other metallurgical slags (7), such as electric furnace slag, converter slag, ladle slag, from a steelworks and slags from a pig iron pretreatment (18, 19) in a slag-conditioning vessel (38),
• introducing metallurgical remainder materials (6), preferably all metallurgical remainder materials (6), such as metallurgical dusts, scale, metallurgical slurries, with the exception of pickling slurries, into the slag-conditioning vessel (38),
• blowing reducing agent (23), preferably together with finely particulate metallurgical remainder materials (6) by co-injection, into the slag-conditioning vessel (38) in order to fully react the substances which have been introduced, in particular to reduce the iron-containing remainder materials (6),
• introducing carbon (23) in order to alloy the reduced iron from the iron-containing remainder materials (6),
• agitating the melts (26, 30) contained in the slag-conditioning vessel (38) by blowing in purge gas via bottom purging elements (48) of the slag-conditioning vessel (38),
• heating the melts (26, 30) contained in the slag-conditioning vessel (38) to a desired temperature or holding them at a defined temperature,
• setting a desired composition of the slag melt (30) contained in the slag-conditioning vessel (38) by adding additives (22), such as lime, clay, quartz, bauxite, fine refractory material, etc.,
• tapping off the conditioned slag melt (30), and
• tapping off the iron-containing melt (26) without any slag.

2. Process according to Claim 1, **characterized in that** slag (5) from at least two or more taps of a blast furnace (2) and/or taps of a melter gasifier- (3) are combined and treated in the slag-conditioning vessel (38).

3. Process according to Claim 1 or 2, **characterized in that** the converter slag is introduced into the slag-conditioning vessel (38) in the liquid state.

4. Process according to one or more of Claims 1 to 3, **characterized in that** the melting of solid charge materials in the slag melt, the introduction of energy for heat-consuming chemical reactions and the heating of the melts (26, 30) contained in the slag-conditioning vessel (38) to a suitable temperature are carried out by the introduction of electrical energy.

5. Process according to one or more of Claims 1 to 4, **characterized in that** the slag melt (30) contained in the slag-conditioning vessel (38) is oxidized in order to be desulphurized, preferably by blowing in oxygen and/or by blowing in an oxygen-containing gas, such as air.

6. Process according to one or more of Claims 1 to 5, **characterized in that** the metallurgical remainder materials (6) are added to the slag melt (30) in the slag-conditioning vessel (38) in the form of lumps and/or fine pieces.

7. Process according to one or more of Claims 1 to 6, **characterized in that** finely particulate metallurgical remainder materials (6) are blown into the slag melt (30) and/or the iron melt (26) below it at a low level, preferably lower than 2 m.

8. Process according to one or more of Claims 1 to 7, **characterized in that** finely particulate metallurgical remainder materials (6) and reducing agents (23) are blown into the slag-conditioning vessel (38) through a common delivery line and/or lance (47) by means of co-injection.

9. Process according to one or more of Claims 1 to 8, **characterized in that** the slag-conditioning vessel (38) is heated by means of electrical resistance heating.

10. Process according to one or more of Claims 1 to 9, **characterized in that** a layer of slag (30) which is over 1 m high, preferably from 2 to 5 m high, is maintained in the slag-conditioning vessel (38).

11. Process according to one or more of Claims 1 to 10, **characterized in that** the desiliconization slag (25) from the pig iron conditioning is introduced into the slag-conditioning vessel (38).

12. Process according to one or more of Claims 1 to 11, **characterized in that** the metallurgical remainder materials (6) from all operations in the metallurgical plant are prepared by screening, milling, drying and the like in a common preparation installation.

13. Process according to one or more of Claims 1 to 12, **characterized in that** the SO₂ (15) which forms in the slag-conditioning vessel (38) is fed to a gypsum or sulphuric acid installation.

14. Process according to one or more of Claims 1 to 13, **characterized in that** off-gas which forms in the slag-conditioning vessel (38) is collected, and the dust is enriched with ZnO contained in this gas.

15. Process according to one or more of Claims 1 to 14, **characterized in that** the conditioned slag (30) is cast, and heat of solidification which is obtained during this operation is used in the preparation (21), for example in the drying, and/or in the preheating of the metallurgical remainder materials (6), of the charge materials (22, 23) and process gases.

16. Process according to one or more of Claims 1 to 15, **characterized in that** the conditioned slag (30) is processed into blast-furnace sand, blast-furnace foamed slag or slag wool.

17. Installation for carrying out the process according to one or more of Claims 1 to 16, **characterized in that** the installation has a single slag-conditioning vessel (38) having a receiving space for receiving metallurgical slags (5, 7), and a heating device, a nozzle or a tapping opening (52) for conditioned slag melt (30) and a tapping opening (51) for an iron-containing melt (26), the slag-conditioning vessel (38) being equipped with charging and blowing apparatus for introducing metallurgical remainder materials (6) and additions (22), and for blowing in reduction or carburizing agents (23), and has additional bottom purging elements (48), such as porous purging bricks, which are connected to lines which supply a purge gas.

18. Installation according to Claim 17, **characterized in that** the slag-conditioning vessel (38') is of tiltable design, and the iron melt (26) can be poured out via a siphon (51'), whereas the slag melt (30) can be poured out via a ladle lip (52').

19. Installation according to Claim 17, **characterized in that** the slag-conditioning vessel (38) is of fixed design, it being possible for the iron melt (26) and the slag melt (30) to be tapped off separately via tapping openings (51, 52) by means of slide/tap systems.

20. Installation according to one of Claims 17 to 19, **characterized in that** an electrical resistance heater is provided as the heating apparatus.

21. Installation according to one of Claims 17 to 20, **characterized in that** one or more lances (47), preferably submerged lances, are provided for the purpose of blowing in gases and/or solids, such as metallurgical remainder materials (6), and can be introduced into the slag-conditioning vessel (38).

## Revendications

1. Procédé de conditionnement des scories (17) et de recyclage des résidus métallurgiques dans l'industrie métallurgique, **caractérisé par** les étapes suivantes :
- regroupement et traitement d'au moins une scorie (5) du groupe de scories d'au moins un jet d'un haut-fourneau (2) ou d'un gazéificateur de fusion (3) d'un procédé de réduction directe à l'état liquide et d'au moins une scorie (5) du groupe des autres scories métallurgiques (7), comme les scories de four électrique, les scories de convertisseur, les scories de poche provenant d'une aciérie et les scories provenant d'un pré-traitement de fer brut (18, 19) dans une cuve de conditionnement de scories (38),
- introduction de résidus métallurgiques (6), de préférence tous les résidus métallurgiques (6), comme les poussières métallurgiques, la calamine, les boues métallurgiques, à l'exception des boues corrosives, dans la cuve de conditionnement de scories (38),
- soufflage de réducteurs (23), de préférence avec des résidus métallurgiques en particules fines (6), par co-injection, dans la cuve de conditionnement de scories (38) pour faire réagir les matières intégrées, notamment réduire les résidus contenant du fer (6),
- introduction de carbone (23) pour allier le fer réduit à partir des résidus contenant du fer (6),
- agitation dans les coulées (26, 30) contenues dans la cuve de conditionnement de scories (38) par soufflage de gaz de lavage par l'intermédiaire d'éléments de lavage de fond (48) de la cuve de conditionnement de scories (38),
- chauffage des coulées (26, 30) contenues dans la cuve de conditionnement de scories (38) à une température souhaitée ou maintien à une certaine température,
- fixation d'une composition souhaitée de la coulée de scories (30) contenue dans la cuve de conditionnement de scories (38) par ajout de matières de complément (22), comme de la chaux, de l'argile, du quartz, de la bauxite, de la poudre incombustible, etc.,
- coulée de la coulée de scories conditionnée (30) et
- coulée sans scories de la coulée contenant du fer (26).

2. Procédé selon la revendication 1, **caractérisé en ce que**, dans la cuve de conditionnement de scories (38), de la scorie (5) d'au moins deux jets ou plus d'un haut-fourneau (2) et/ou jets d'un gazéificateur de fusion (3) est rassemblée et traitée.

3. Procédé selon la revendication 1 ou 2, **caractérisé en ce que** la scorie de convertisseur est introduite à l'état liquide dans la cuve de conditionnement de scories (38).

4. Procédé selon l'une quelconque ou plusieurs des revendications 1 à 3, **caractérisé en ce que** la fusion des matières de charge solides dans la coulée de scories, l'apport énergétique pour les réactions chimiques consommant de la chaleur et le chauffage des coulées (26, 30) contenues dans la cuve de conditionnement de scories (38) sont réalisés à une température adéquate par introduction d'énergie électrique.

5. Procédé selon l'une quelconque ou plusieurs des revendications 1 à 4, **caractérisé en ce que** la coulée de scories (30) contenue dans la cuve de conditionnement de scories (38) est oxydée aux fins de désulfuration, de préférence par soufflage d'oxygène et/ou soufflage d'un gaz contenant de l'oxygène, comme l'air.

6. Procédé selon l'une quelconque ou plusieurs des revendications 1 à 5, **caractérisé en ce que** les résidus métallurgiques (6) sont versés en morceaux et/ou en petits morceaux sur la coulée de scories (30) dans la cuve de conditionnement de scories (38).

7. Procédé selon l'une quelconque ou plusieurs des revendications 1 à 6, **caractérisé en ce que** les résidus métallurgiques en particules fines (6) sont soufflés en profondeur, de préférence plus profond que 2 m, dans la coulée de scories (30) et/ou la coulée de fer (26) située dessous.

8. Procédé selon l'une quelconque ou plusieurs des revendications 1 à 7, **caractérisé en ce que** les résidus métallurgiques en particules fines (6) et les réducteurs (23) sont soufflés par une canalisation de convoyage et/ou lance commune (47) par co-injection dans la cuve de conditionnement de scories (38).

9. Procédé selon l'une quelconque ou plusieurs des revendications 1 à 8, **caractérisé en ce que** la cuve de conditionnement de scories (38) est chauffée au moyen d'un chauffage à résistance électrique.

10. Procédé selon l'une quelconque ou plusieurs des revendications 1 à 9, **caractérisé en ce qu'**on maintient dans la cuve de conditionnement de scories (38) une couche de scories (30) de plus de 1 m, de préférence de 2 à 5 m de haut.

11. Procédé selon l'une quelconque ou plusieurs des revendications 1 à 10, **caractérisé en ce que** la scorie de désiliçage (25) issue du conditionnement de fer brut est utilisée dans la cuve de conditionnement de scories (38).

12. Procédé selon l'une quelconque ou plusieurs des revendications 1 à 11, **caractérisé en ce que** les résidus métallurgiques (6) de toutes les activités de l'usine métallurgique sont préparés par criblage, broyage, séchage et similaire dans une installation de préparation commune.

13. Procédé selon l'une quelconque ou plusieurs des revendications 1 à 12, **caractérisé en ce que** le SO₂ (15) apparaissant dans la cuve de conditionnement de scories (38) est envoyé à une unité de plâtre ou d'acide sulfurique.

14. Procédé selon l'une quelconque ou plusieurs des revendications 1 à 13, **caractérisé en ce que** le gaz d'échappement apparaissant dans la cuve de conditionnement de scories (38) est rassemblé et que le ZnO qu'il contient est concentré dans de la poussière.

15. Procédé selon l'une quelconque ou plusieurs des revendications 1 à 14, **caractérisé en ce que** la scorie conditionnée (30) est fondue et que la chaleur de solidification alors émise est utilisée lors de la préparation (21), par exemple lors du séchage et/ou lors du préchauffage des résidus métallurgiques (6), des matières de charge (22, 23) et des gaz de traitement.

16. Procédé selon l'une quelconque ou plusieurs des revendications 1 à 15, **caractérisé en ce que** la scorie conditionnée (30) est transformée en sable métallurgique, gravier métallurgique ou en laine de scorie.

17. Installation pour la mise en oeuvre du procédé selon l'une quelconque ou plusieurs des revendications 1 à 16, **caractérisée en ce que** l'installation présente une seule cuve de conditionnement de scories (38) comportant une chambre réceptrice destinée à recevoir les scories métallurgiques (5, 7) ainsi qu'un dispositif de chauffage, une busette ou une ouverture de coulée (52) pour la coulée de scories conditionnée (30) et une ouverture de coulée (51) pour une coulée contenant du fer (26), la cuve de conditionnement de scories (38) étant équipée de dispositifs de charge et de soufflage pour l'introduction de résidus métallurgiques (6) et d'additifs (22) ainsi que pour le soufflage de produits (23) de réduction ou de cokéfaction, et des éléments de lavage de fond supplémentaires (48), comme des bacs de lavage poreux qui sont raccordés à des canalisations acheminant un gaz de lavage.

18. Installation selon la revendication 17, **caractérisée en ce que** la cuve de conditionnement de scories (38') est réalisée de manière à être basculable, la coulée de fer (26) pouvant être déversée par un siphon (51'), mais la coulée de scories (30) par un bec de poche (52').

19. Installation selon la revendication 17, **caractérisée en ce que** la cuve de conditionnement de scories (38) est réalisée de manière à être fixe, la coulée de fer (26) et la coulée de scories (30) pouvant être déversées séparément par des ouvertures de coulée (51, 52) au moyen de systèmes de coulée à tiroirs.

20. Installation selon l'une quelconque des revendications 17 à 19, **caractérisée en ce qu'**il est prévu comme dispositif de chauffage un chauffage à résistance électrique.

21. Installation selon l'une quelconque des revendications 17 à 20, **caractérisée en ce qu'**une ou plusieurs lances (47), de préférence des lances plongeantes, sont prévues pour souffler des gaz et/ou des matières solides, comme des résidus métallurgiques (6) qui peuvent être introduits dans la cuve de conditionnement de scories (38).
